Europäisches Patentamt

European Patent Office

Office européen des brevets

(19)

(11) EP 1 584 903 A1

## (12) EUROPEAN PATENT APPLICATION
published in accordance with Art. 158(3) EPC

(43) Date of publication:
**12.10.2005 Bulletin 2005/41**

(21) Application number: **03768271.3**

(22) Date of filing: **25.12.2003**

(51) Int Cl.⁷: **G01J 3/52**, G06T 11/60, H04N 1/40, H04N 1/46, H04N 1/60

(86) International application number:
**PCT/JP2003/016790**

(87) International publication number:
**WO 2004/063685 (29.07.2004 Gazette 2004/31)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.01.2003 JP 2003006305**

(71) Applicant: **Mimoto Gousei Jyushi Kabushiki Kaisha**
**Mie 514-0812 (JP)**

(72) Inventors:
• **GOKA, Toshio, c/o Mimoto Gousei Jyushi K.K.**
**Tsu-shi, Mie 514-0812 (JP)**
• **GOKA, Daisuke, c/o Mimoto Gousei Jyushi K.K.**
**Tsu-shi, Mie 514-0812 (JP)**

(74) Representative: **Cresswell, Thomas Anthony**
**J.A. KEMP & CO.**
**14 South Square**
**Gray's Inn**
**London WC1R 5JJ (GB)**

(54) **METHOD OF COLOR SPECIFICATION AND, USING THE SAME, COLOR COLUMN STRUCTURE AND COLOR CHART**

(57)     A novel color system capable of quantitatively and directly specifying by numeric value a wide spectrum of colors including achromatic colors, chromatic colors, colorless transparency and colored transparency. The invention provides a color specification method for displaying colors using values including: (a) a cyan color specification value for displaying the cyan density as a numeric value from 0 to 100% with transparency as a reference; (b) a magenta color specification value for displaying the magenta density as a numeric value from 0 to 100% with transparency as a reference; (c) a yellow color specification for displaying the yellow density as a numeric value from 0 to 100% with transparency as a reference; and (d) a white color specification value for displaying the white density as a numeric value from 0 to 100% with transparency as a reference.

FIG.1

EP 1 584 903 A1

## Description

TECHNICAL FIELD

The present invention relates to technology for displaying colors using numeric values, and for making the color displayed by numeric values visible. More particularly, the present invention is relates to technology that is able to display colors using numeric values, including colors for transparent (including both achromatic transparency and chromatic transparency) articles widely used for industrial products and the like, and relates to color charts that are able to make visible as a color sample the colors displayed by numeric values in this way.

BACKGROUND ART

"Colors" are something very familiar to humans, and as the current era is called "the age of color," many colors are created and offered. Particularly for products including industrial products, there is no question that "color" is an important element that significantly affects the product value. In the light of this, for products including industrial products and the like, there is a high level of demand that product "colors" be kept identical, from the perspective of maintaining product quality as well.

However, due to their characteristics, "colors" are difficult to define physically, and establishing an objective index for them is difficult. One reason for this is that the recognition of "colors" is based on subjective factors. Namely, this is based on the fact that currently, "colors" are recognized by the human brain which senses them with stimulation of the cone cells and rod cells when reflection, transmission, and or diffraction or the like occur with radiation of light (electromagnetic waves) emitted from a light source such as the sun and that reflected light, transmitted light, or diffracted light or the like is made incident on the human eye, in other words, based on the fact that "there is no color to the physical object itself," and on the fact that "light also has no color at all."

Specifically, as the most familiar color specification method, specification using the "color names" such as those stipulated in JIS Z 8102 or JIS Z 8110, for example, are known. However, color names are limited, and not only is it impossible to correspond to the many existing colors, but from the issues such as that even if we say "blue," "red" or the like, there is also a difference in the level of recognition according to the individual. Also, there is a significant difference in that "blue" for Japanese people is a purplish blue and "blue" for Americans indicates a greenish blue. It goes without saying that it is not possible for the concerned "color names" to be an index that satisfies the level of precision required for industry in the society of recent years.

In light of this, there is a demand for the establishment of a color specification method that quantitatively displays colors using symbols or numeric values (called color specification values).

Then, as one method for this, a color specification system is known that uses a Munsell color chart such as that stipulated in ASTM D 1535-80 or in JIS Z 8721. The Munsell color chart displays colors divided into three attributes of hue (H), value (V), and chroma (C), and to display colors using numeric values according to the Munsell color chart, this is done with each value of HVC noted together as shown in "5G5/10," or the like, for example. However, the Munsell color chart is divided for hue into five levels of red (R), yellow (Y), green (G), blue (B), and purple (P), and expresses ten levels with YR, GY, BG, PB, and RP inserted between each of those, and for value, is divided into ten levels with absolute black as 0 and absolute white as 10 and the other levels between these. Therefore, for hue, the subjective factor is strong, and it is hard to say that it is always possible to specify using numeric values, in addition to which the clearly specified number of colors is low in terms of levels. In actuality, those values are operated by supplementing intermediate colors made by subjective judgment by adding numbers below the decimal point, whereby there is the problem that color specification is even more vague.

Also, as another color specification method, as stipulated in JIS Z 8701, proposed is a method (XYZ system display or CIE color specification method) with which colors are represented by numeric values by calculating XYZ, which are called the tristimulus values. This is because the human eye has three spectral sensitivities in relation to visible light, and this is an optical color specification method based on a sensitivity to the physiological color stimulus of identifying colors with three visual senses combined including the X visual sense correlating to the red wavelength area, the Y visual sense correlating to the green wavelength area, and the Z visual sense correlating to the blue wavelength area.

This XYZ color specification system (CIE color specification system) is excellent in terms of being able to quantitatively specify color sense by humans simply with numeric values. However, with the XYZ color specification system (CIE color specification system), there were two problems. One of these is that with subtractive color mixtures, there is a complex relationship between the mixing quantities of the tristimulus (XYZ) values and the three primary colors (cyan, magenta, yellow) that are the subtractive color mixtures primaries (subtractive primaries). Therefore, it is very difficult to forecast the color that will be obtained, making these difficult to handle. The other problem is that subtractive color mixtures have white as the reference color, and the subject is a color that occurs by a mixture of the three primaries (cyan, magenta, yellow), whereby it is impossible to represent transparency. In particular, with industrial products which use many synthetic resins as materials, the colors are non light emitting colors, and the same as with color materials, filters and the like, these are the subtractive color mixtures for which, as the number of mixed color elements increases, the brightness of the colors that are made by color mixing becomes darker subtractively (by subtraction). In addition to this, there are many internal colorations used, and from the fact that there are many achromatic transparent and chromatic transparent products, as described above, the color specification methods using the XYZ color specification system (CIE color specification system) were not necessarily effective.

DISCLOSURE OF THE INVENTION

(Problems the Invention Attempts to Solve)

The present invention has been developed with the circumstances described above as the background, and it is one object of the invention to provide a practical and novel color specification method for which it is relatively easy to forecast colors for the subtractive color mixtures based on a color specification value, and that can specify colors including transparency.

Another object of the present invention is to provide a specific color specification structure for design drawings, order charts, products, or the like that follows this novel color specification method.

Yet another object of the present invention is to provide a color chart for which colors specified by numeric values by the new color specification method according to the present invention described above is made visible efficiently as a color sample.

(Means for Solving the Problems)

There will be described modes of the invention created for the purpose of addressing the above problems. Elements employed in each mode described herein may be employed in any possible combination. It is to be understood that the modes and technical features of the invention are not limited to those disclosed herein, but may otherwise be recognized based on the teachings of the present invention disclosed in the entire specification and drawings or that may be recognized based on concept of the invention recognized by those skilled in the art in the light of the present disclosure.

(The Present Invention Relating to a Color Specification Method)

The present invention relating to a color specification method is a color specification method for displaying colors using values including: (a) a cyan color specification value for displaying the cyan density as a numeric value from 0 to 100% with transparency as a reference; (b) a magenta color specification value for displaying the magenta density as a numeric value from 0 to 100% with transparency as a reference; (c) a yellow color specification for displaying the yellow density as a numeric value from 0 to 100% with transparency as a reference; and (d) a white color specification value for displaying the white density as a numeric value from 0 to 100% with transparency as a reference.

According to this kind of present invention, for example when the white density is 100%, by suitably adjusting the cyan color specification value, the magenta color specification value, or the yellow color specification value, according to the principles of mixing the three primary colors of the subtractive color mixtures, it becomes possible to do numeric value display of various types of chromatic colors and achromatic colors excluding transparency. Also, with the white density not less than 0 and less than 100%, by suitably adjusting the cyan color specification value, the magenta color specification value, and the yellow color specification value, according to the principles of mixing the three primary colors of the subtractive color mixtures, it becomes possible to do numeric value display of various types of chromatic colors and achromatic colors that have a degree of transparency.

In the present invention, each density of the cyan color specification value, the magenta color specification value, and the yellow color specification value, is optical density, and it is preferable to use single color densities or spectroscopy densities. For instance, it is possible for this to be interpreted as a transmission density with a transmission object, and as a reflection density with a reflective object, but it is also possible to use an equivalent neutral density (END). Also, when an existing color is the subject, for example, it is possible to measure the density using a visual densitometer or a photoelectric densitometer. Then, for colors obtained according to each color specification value, in specific terms, for example when we consider a color film, when the cyan primary color C, the magenta primary color M, and the yellow primary color Y are mixed respectively in mixing quantities c, m, and y, the color F that is obtained can be expressed as shown by the equation below by considering Beer's law.

$$F = Cc \times Mm \times Yy$$

Also, in the case of the subtractive color mixtures, accurately forecasting colors generated from the three primary colors mixing volume described above is difficult. However, for example, it is possible to do an estimate using the Lambert-Beer law or the Kubelka-Munk theory or the like according to the coloring subject or the differences in the coloring agents used or the like.

Furthermore, with the present invention, the white density is reflected on the transparency that is the reference for the cyan color specification value, the magenta color specification value, and the yellow color specification value, making the white density 0 is the same as making each reference for the cyan color specification value, the magenta color specification value, and the yellow color specification value an achromatic transparency, and making the white density 100 is the same as making each reference for the cyan color specification value, the magenta color specification value, and the yellow color specification value a white non-transparency.

(The Present Invention Relating to a Color Column Structure)

The present invention relating to a color column structure is characterized by being a color column structure for displaying colors provided with the following features: (a') a cyan color specification value display column for displaying the cyan density as a numeric value from 0 to 100% with transparency as a reference; (b') a magenta color specification value display column for displaying the magenta density as a numeric value from 0 to 100% with transparency as a reference; (c') a yellow color specification value display column for displaying the yellow density as a numeric value from 0 to 100% with transparency as a reference; and (d') a white color specification value display column for displaying the white density as a numeric value from 0 to 100% with transparency as a reference.

According to the color column structure of this mode of present invention, as is also apparent from the description of the color specification method according to the present invention described above, one color is specified by combining each numeric value respectively noted for the cyan color specification value display column, the magenta color specification value display column, the yellow color specification value display column, and the white color specification value display column. In particular, a color specified in this way is specified including the degree of transparency.

Therefore, by showing the color column structure of the present invention, for example, in design drawings such as industrial product parts diagrams and product drawings, or on an order chart or the like, it is possible to specify and do quantitative display of transacted industrial product colors using numeric values, it is possible to do transactions or the like efficiently.

(The Present Invention Relating to a Color Chart)

The present invention relating to a color chart is characterized by being a color chart comprising: (e) a hue color chart including a plurality of first color specification plates each using an X axis and a Y axis representing coordinate axes orthogonal to each other with density of two of the colors among cyan, magenta, and yellow varied in a range from 0 to 100 %, and each displaying mixed colors of the two colors on an orthogonal coordinate plane of the X axis and Y axis, the plurality of first color specification plates being arranged so that original points in form of crossing points of the X axis and the Y axis of the plurality of first color specification plates are arranged along a variation of density of a remaining one color of the colors among cyan, magenta, and yellow in a range from 0 to 100 %; and (f) a value color chart including a second color specification plate that displays white as a single color with the white density varied in a range from 0 to 100 % with transparency as a reference, wherein the color chart makes it possible to observe colors with the second color specification plate of the value color chart overlaid over each of the first color specification plates of the hue color chart.

For the color chart constituted according to this mode of the present invention, since both the first color specification plate and the second color specification plate use transparency as a reference, it is possible to make visible directly the mixed color synthesized by overlaying these on each other. With this arrangement, it becomes possible to easily forecast the color generated by mixing cyan, magenta, yellow, and white at respectively specified densities.

The color chart according to the present invention may be formed by a transparent resin plate such as acrylic or the like, for example. At this time, it goes without saying that each density should be set considering not only the dye or pigment but also the plate thickness when doing internal coloring.

Also, with the color chart according to the present invention, it is also possible to vary each color density successively in non-step fashion. Preferably, each of the first color specification plates has a two dimensional grid form in suitable unit quantity increments of the X axis and the Y axis, and while also displaying each one of the mixed colors for each of divisions of this grid form, and wherein the second color specification plate has a one dimensional division form in suitable unit quantity increments, and a single color of each single white is displayed on each division. Furthermore, it is preferable that the size of each division of the first color specification plate and the second color specification plate be substantially the same.

When using this kind of division structure, compared to when varying each color density successively, the number of colors displayed is limited by the number of divisions. However, this makes the color specifically easy to understand. It also becomes easier to observe using overlaying. Observation of the overlaid first and second color charts is performed by transmitted light observation or reflected light observation considering the item to be chromatic or the like. It is also preferable to consider the observation state of the item to be chromatic for the lighting when observing, and for example, it is possible to use a standard light of D65 or the like.

## BRIEF DESCRIPTION OF THE DRAWINGS

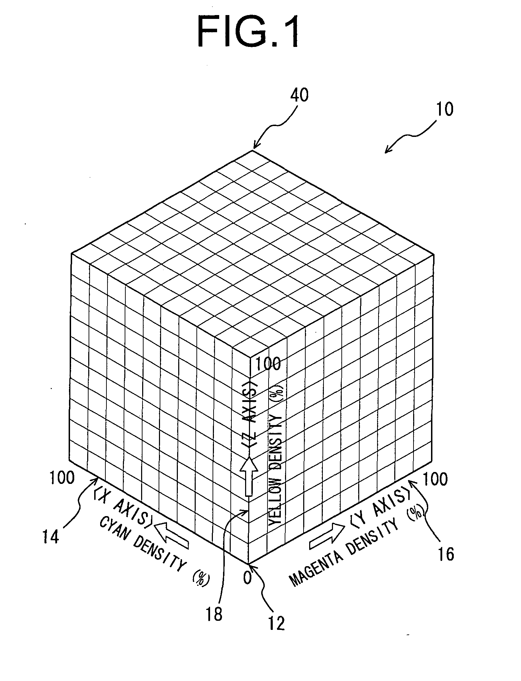

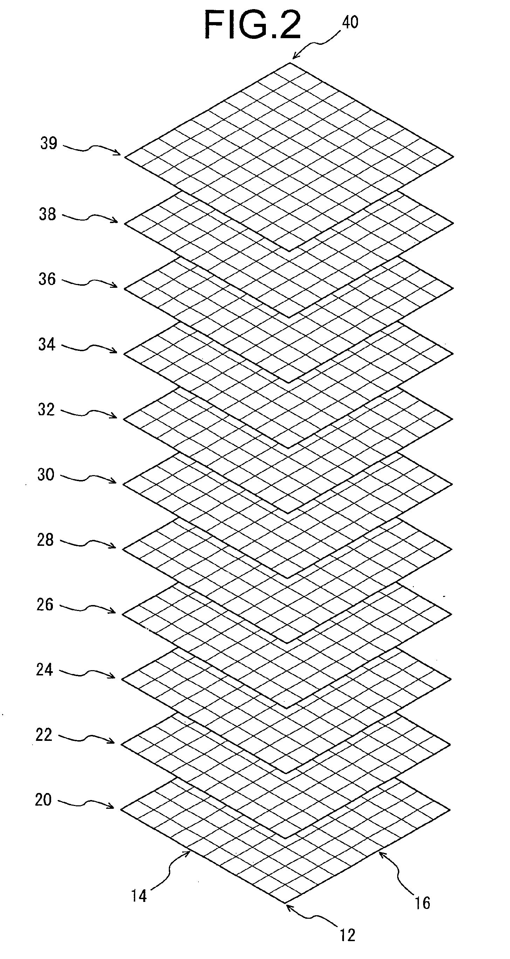

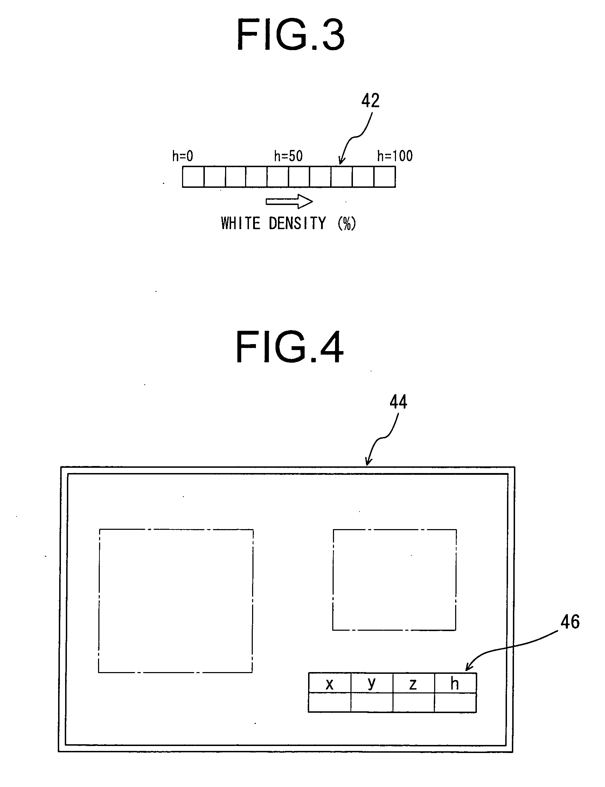

FIG. 1 is a perspective view showing a pictorial drawing of a virtual color for giving a specific description of the color specification method according to the present invention. FIG. 2 is an explanatory drawing showing first color specification plates that form the color chart as an embodiment of the present invention. FIG. 3 is an explanatory drawing showing a second color specification plate that forms a color chart as an embodiment of the present invention. FIG. 4 is an explanatory drawing showing a color column structure as an embodiment of the present invention.

## PREFERRED EMBODIMENTS OF THE INVENTION

To make the present invention more specifically clear, a detailed explanation is given of embodiments of the present invention while referring to the drawings.

First, FIG. 1 shows a pictorial diagram of a virtual color for giving a more specific description of the color specification method according to the present invention. A illustrated solid body 10 has a cubic (cube) shape with sides of equal length, with one vertex 12 as the origin point, three sides 14, 16, and 18 that are orthogonal to each other are an X axis, a Y axis, and a Z axis. In this way, the X axis, Y axis, and Z axis work together to form a stereoscopic, three dimensional orthogonal coordinate system with the vertex 12 as the origin point.

Also, all of the X axis, Y axis, and Z axis have a fixed interval gradated scale with one end origin point 12 as 0 %, and the other end as a maximum of 100 %, and particularly with the item shown by example in the drawing, all of these X axis, Y axis, and Z axis respectively are noted with a scale of 10 equal divisions.

Specifically, for this kind of solid body 10, when the Z axis value is z = 0, a two dimensional orthogonal coordinate plane (X-Y plane) including the X axis and the Y axis is conceived. Then, orthogonal coordinate planes parallel to this orthogonal coordinate plane are conceived to exist respectively according to the z value, so that this solid body 10 can be thought of as having two dimensional orthogonal coordinate planes that expand orthogonally along the Z axis being stacked in the Z axis direction. When the X axis is similarly thought of as the reference, this solid body 10 may also be thought of as being a two dimensional orthogonal coordinate plane (Y-Z plane) that expands orthogonally along the X axis being stacked in the X axis direction, or when the Y axis is thought of as the reference, it can be thought of as a two dimensional orthogonal coordinate plane (Z-X plane) that expands orthogonally along the Y axis being stacked in the Y axis direction.

The value of each scale from 0 to 100 attached to the X axis, Y axis, and Z axis expresses with transparency as a reference the density of the three primary colors (cyan, magenta, and yellow) of the subtractive color mixtures. Preferably, this density is a single color density with optical density as one type, and to use, for example, a densitometer that uses an integrating sphere and a photoelectric light receiving device to set a value that corresponds to an optical density measured using a publicly known optical densitometer with a simpler structure. Note that for this optical density, the measured light beam differs according to the subject. Transmitted light is the subject in the case of optical transmission film or the like for which exclusively transmitted light color is a problem, but the reflected light is the subject in the case of a light reflecting coating film or the like for which exclusively reflective light color is a problem.

Therefore, for the solid body 10 in the figure, the origin point 12 is completely transparent. Then, on the X axis, while the cyan density increases progressively from 0 to 100 %, the color is specified so that the magenta and yellow densities are always 0. Similarly, on the Y axis, while the magenta density increases progressively from 0 to 100 %, the color is specified so that the cyan and yellow densities are always 0, and furthermore, on the Z axis, while the yellow density increases progressively from 0 to 100 %, the color is specified so that the magenta and cyan densities are always 0.

Specifically, with the illustrated solid body 10, when we consider that a total of 101 scales are added including 0 and 100 on each axis of the X axis, Y axis and Z axis, it is possible to uniquely specify using numeric values a total of 1030301 types (101 x 101 x 101) of colors by combining the values of these three scales.

Furthermore, to be able to specifically understand each color that is color specified by the solid body 10 consisting of three orthogonal axes (X axis, Y axis, and Z axis), for example as shown in FIG. 2, it is possible to conceive of those three axes as an X-Y plane and a plurality of first color specification plates that are parallel to that, each respectively divided into 10 equal parts.

For example, when we think of the X-Y plane (z = 0) as one first color specification plate 20, a grid shaped division of 10 x 10 = 100 is formed on the first color specification plate 20, and for all of those divisions, the yellow density is 0 (z = 0), and the cyan density (x) and the magenta density (y) value combination is different, so mutually different colors will be specified. Note that the x and y values for each of the division colors can be the center coordinate point of each division, for example. Furthermore, separate from the z = 0 first color specification plate 20, there are ten types (z = 10 %, 20 %, 30 %, 40 %, 50 %, 60 %, 70 %, 80 %, 90 %, and 100 %) first color specification plates 22, 24, 26, 28, 30, 32, 34, 36, 38 and 39 with different yellow densities in parallel to this first color specification plate 20. Then, for all of those ten first color specification plates 22, 24, 26, 28, 30, 32, 34, 36, 38, and 39, there are formed grid shaped divisions of 10 x 10 = 100, and simply by having mutually different yellow density (z) for each of the first color specification plates 22, 24, 26, 28, 30, 32, 34, 36, 38, and 39, at the 100 grid shaped division of each first color specification plate 22, 24, 26, 28, 30, 32, 34, 36, 38 and 39, colors are respectively specified corresponding to each combination of the cyan density (x) and the magenta density (y) values. As is understood from this, with this embodiment, only in the Z axis direction including 0 and 100. Ultimately the first color specification plate is displayed divided into 11 types, and with a total of 11. There are 1100 (10 x 10 x 11) types of colors of divisions displayed.

In other words, the 1100 types of colors described above are all specified and displayed in the total of 1100 divisions of the total of 11 first color specification plates. Also, for this color specification plate, on origin point 12 of the solid body 10 and the facing edge line connecting a facing vertex 40, black color is expressed by having the densities of cyan, magenta, and yellow be the same as each other. In fact, this black color has the degree of transparency varied on the line of the facing vertex 40 from the origin point 12.

As is apparent from this, the colors recognized by the solid body 10, specifically, the colors recognized by the plurality of first color specification plates 20, 22, 24, 26, 28, 30, 32, 34, 36, 38, and 39 described above are able to express all the subtractive color mixtures using the three primary colors (cyan, magenta, and yellow). Particularly, by using transparency as the reference for the origin point 10, it is possible to express each color that is created using the subtractive color mixtures including the transparent color. Then, those colors can be specified uniquely using the numeric values of each density x, y, and z of the three primary colors of cyan, magenta and yellow, and quantitative display is possible.

However, with the solid body 10 described above, since this is the subtractive color mixtures, a white color system is not expressed. Therefore, it is not possible to create and specify a color system that is whiter (a brighter color) than each single color of cyan, magenta, and yellow. In light of this, to make it possible to express and specify the white color system, an example of a second color specification plate 42 is shown in FIG. 3. This second color specification plate 42 uses transparency as a reference, varies the white density one dimensionally in a numeric value range from 0 to 100 (%), and displays white single colors of varying density in sequence. With the second color specification plate 42 in FIG. 2, an item is shown as an example expressing density of 0 to 100 divided equally into 10 parts. Note that density is a value according to the primary color density for the solid body 10 described previously.

Specifically, with this second color specification plate 42, at the point that the density h is h = 0, this is an achromatic transparency. The color specification at that point is the same as the color specification at the point that the origin point (x, y, z) = (0, 0, 0) for the subtractive three primary color solid body 10 described above. Meanwhile, with the second color specification plate 42, a non-transparent white color results at the point that the density h is h = 100. However, with this embodiment, the colors of the 10 divisions provided on the second color specification plate 42 have densities equivalent to the center coordinate point of each division, so that there is no complete black or white.

Therefore, by combining the 11 first color specification plates 20, 22, 24, 26, 28, 30, 32, 34, 36, 38, and 39 described above and the one second color specification plate 42, theoretically, as described previously, it is possible to make visible specifically and as an example all color ranges including chromatic colors and achromatic colors that can be specified quantitatively using numeric values by combining each value of x, y, z, and h.

When we consider expressing color using one solid body 10, conceptually, the transparency of the origin point of the solid body 10 can be understood as something that is converted to white color of a suitable density for the concerned second color specification plate 42 according to the density of the white color to be considered. In other words, the transparency of the origin point of the solid body 10 is an item converted to a while color of any of the 10 types of densities expressed with the second color specification plate 42. As a result, there is the specific solid body 10 with the while color as a reference of the 10 types of densities for the second color specification plate 42. It is possible to understand this as a conception of a total of ten of the solid bodies 10.

With this arrangement, a color specification system that considers up to a white color system is completed. With the example model shown in FIGS. 1-3, at the facing vertex 40, when we consider points for which density changes are not seen already, the 101 x 101 x 101 x 100 - 100 = 103030000 types of colors are directly expressed as numeric values and specified by combining each of the values of x, y, z, and h described above. Then, a point of particular focus is that for the concerned color specification system, by making any of the references of each value of x, y, z, and h transparent, it is possible to express color systems that also consider transparency. With this arrangement, it is possible to have a color specification also for synthetic resin molded products of the internal coloring type, which are widely used for chromatic transparent products, for example.

Also, with the model shown as the example, all of the first color specification plates 20, 22, 24, 26, 28, 30, 32, 34, 36, and 39 and the second color specification plate 42 are preferably formed using a thin walled flat plate shape using a transparent material such as acrylic resin or the like. Therefore, by overlaying one first color specification plate division having a suitable x, y, and z value on a division of a suitable h value of the second color specification plate 42, it is possible to easily and schematically enable visual observation of synthetically created colors. Particularly, in the case of transmission type filters and the like, this does not limit the first color specification plate and the second color specification plate overlay sequence.

Furthermore, as described above, for the color specification system, by specifying combinations of each value of x, y, z, and h, it is possible to uniquely express colors in a broad area including achromatic and chromatic transparency. Therefore, for specification of colors when ordering or manufacturing products, as shown in FIG. 4, for example, an order chart or a design drawing 44 includes an input space for each value "cyan density (x)," "magenta density (y)," "yellow density (z)," and "white density (h)" at a suitable location. A color column 46 of the shown structure for noting each specification value can be used advantageously. When specifying a plurality of colors for one order chart or design drawing, it should be appreciated that a plurality of this kind of input column may be provided.

As is understood from the description above, with the model shown as an example, the hue system color chart is formed by the first color specification plates 20, 22, 24, 26, 28, 30, 32, 34, 36, 38, and 39, and at the same time, the value system color chart is formed by the second color specification plate 42.

While the invention has been shown in detail hereinabove through the specific embodiment, this is merely exemplary, and the invention should in no way be construed as being limited to the specific disclosure of the embodiment hereinabove. The present invention may be embodied with various other changes, modifications and improvements, which may occur to those skilled in the art, without departing from the spirit and scope of the invention.

For example, as one method for expressing visibly a color specified by the color specification method according to the present invention, as described above, a color chart consisting of the first and second color specification plates 20, 22, 24, 26, 28, 30, 32, 34, 36, 38, 39, and 42 is effective, but the number of color display classifications for this color chart is not limited to the 10 sections in each axis direction as shown in the example.

Also, the method for expressing visible colors specified using a color specification method according to the present invention is not limited to the color chart shown in the example. In specific terms, as described above, it is possible to specify colors using numeric values with the color specification system. Therefore, it is also possible to create a database in which are recorded as electronic data colors that are correlated to each numeric value in advance, and using a computer, based on this database, to display on a color display the colors specified by inputting each value of x, y, z, and h described above.

As is apparent from the description above, according to the color specification method of the present invention, it is possible to quantitatively and uniquely express a broad range of colors including achromatic colors, chromatic colors, achromatic transparency, and chromatic transparency. With this arrangement, it is possible to easily perform specification of colors for industrial products, for example, with a low labor burden and with sufficient precision using a standardized method.

Also, by using the color column structure according to the present invention, it is possible to specify colors of products and the like in design drawings and the like, for example, both directly and simply by using numeric values according to the color specification method of the present invention.

Also, by using the color chart of the structure according to the present invention, an approximate sample of a color directly specified by a numeric value using the color specification method of the present invention can be expressed to be visible with a simple structure and easy operability.

INDUSTRIAL APPLICABILITY

The present invention is utilizable for the industrial production processes or commercial transaction processes for products including industrial products in particular, and relates to the method of specifying color for products and the like, and to the color specification display structure for the color charts and drawings and the like. Therefore, it is apparent that the present invention is useful for industrial purposes.

**Claims**

1. A color specification method for displaying colors using values including:

    a cyan color specification value for displaying the cyan density as a numeric value from 0 to 100% with transparency as a reference;
    a magenta color specification value for displaying the magenta density as a numeric value from 0 to 100% with transparency as a reference;
    a yellow color specification for displaying the yellow density as a numeric value from 0 to 100% with transparency as a reference; and
    a white color specification value for displaying the white density as a numeric value from 0 to 100% with transparency as a reference.

2. A color column structure for displaying colors comprising:

    a cyan color specification value display column for displaying the cyan density as a numeric value from 0 to 100% with transparency as a reference;

a magenta color specification value display column for displaying the magenta density as a numeric value from 0 to 100% with transparency as a reference;

a yellow color specification value display column for displaying the yellow density as a numeric value from 0 to 100% with transparency as a reference; and

a white color specification value display column for displaying the white density as a numeric value from 0 to 100% with transparency as a reference.

3. A color chart comprising:

a hue color chart including a plurality of first color specification plates each using an X axis and a Y axis representing coordinate axes orthogonal to each other with density of two of the colors among cyan, magenta, and yellow varied in a range from 0 to 100 %, and each displaying mixed colors of the two colors on an orthogonal coordinate plane of the X axis and Y axis, the plurality of first color specification plates being arranged so that original points in form of crossing points of the X axis and the Y axis of the plurality of first color specification plates are arranged along a variation of density of a remaining one color of the colors among cyan, magenta, and yellow in a range from 0 to 100 %; and

a value color chart including a second color specification plate that displays white as a single color with the white density varied in a range from 0 to 100 % with transparency as a reference,

wherein the color chart makes it possible to observe colors with the second color specification plate of the value color chart overlaid over each of the first color specification plates of the hue color chart.

4. A color chart according to claim 3, wherein each of the first color specification plates has a two dimensional grid form in suitable unit quantity increments of the X axis and the Y axis, and while also displaying each one of the mixed colors for each of divisions of the grid form, and wherein the second color specification plate has a one dimensional division form in suitable unit quantity increments, and a single color of each single white is displayed on each division.

# FIG.1

# FIG.2

# FIG.3

42

h=0         h=50       h=100

WHITE DENSITY (%)

# FIG.4

44

46

| x | y | z | h |
|---|---|---|---|
|   |   |   |   |

## INTERNATIONAL SEARCH REPORT

| International application No. |
| --- |
| PCT/JP03/16790 |

**A. CLASSIFICATION OF SUBJECT MATTER**
Int.Cl⁷ G01J3/52, G06T11/60, H04N1/40, H04N1/46, H04N1/60

According to International Patent Classification (IPC) or to both national classification and IPC

**B. FIELDS SEARCHED**

Minimum documentation searched (classification system followed by classification symbols)
Int.Cl⁷ G01J3/46-3/52, B41J3/00, B44D3/00, G01N21/01, H04N1/40,
H04N1/46, H04N1/60

Documentation searched other than minimum documentation to the extent that such documents are included in the fields searched
Jitsuyo Shinan Koho          1922–1996   Toroku Jitsuyo Shinan Koho   1994–2004
Kokai Jitsuyo Shinan Koho    1971–2004   Jitsuyo Shinan Toroku Koho   1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 11-173917 A (Kabushiki Kaisha Daimaru Graphics), 02 July, 1999 (02.07.99), Full text; Figs. 1 to 7 (Family: none) | 1-4 |
| A | US 5493321 A (Minnesota Mining and Manufacturing Co.), 20 February, 1996 (20.02.96), Full text; Figs. 1 to 14 & JP 7-23247 A          & EP 623062 A1 | 1-4 |
| A | JP 6-258907 A (Canon Inc.), 16 September, 1994 (16.09.94), Full text; Figs. 1 to 8 (Family: none) | 1-4 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 31 March, 2004 (31.03.04) | 13 April, 2004 (13.04.04) |

| Name and mailing address of the ISA/ Japanese Patent Office | Authorized officer |
| --- | --- |
| Facsimile No. | Telephone No. |

Form PCT/ISA/210 (second sheet) (July 1998)

12

| | **INTERNATIONAL SEARCH REPORT** | International application No. |
|---|---|---|
| | | PCT/JP03/16790 |

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 142194/1983(Laid-open No. 51438/1985) (Toyo Ink Manufacturing Co., Ltd.), 11 April, 1985 (11.04.85), Full text; Figs. 1 to 3 (Family: none) | 1-4 |
| A | JP 2000-88652 A  (Kabushiki Kaisha Sato), 31 March, 2000 (31.03.00), Full text; Figs. 1 to 9 (Family: none) | 1-4 |
| A | JP 48-41787 A  (Rigio WAKI), 18 June, 1973 (18.06.73), Full text; Figs. 1 to 6 (Family: none) | 1-4 |

Form PCT/ISA/210 (continuation of second sheet) (July 1998)